# EUROPÄISCHE PATENTSCHRIFT

(11) **EP 2 545 417 B1**
(45) Veröffentlichungstag und Bekanntmachung des Hinweises auf die Patenterteilung: **26.02.2014**
(21) Anmeldenummer: 11708801.3
(22) Anmeldetag: 10.03.2011
(51) Int. Cl.: G05B 19/042, G05B 19/05, G05B 19/418

(54) **VERFAHREN ZUM ERSETZEN EINER BESTEHENDEN LEITEINRICHTUNG IN EINEM AUTOMATISIERUNGSSYSTEM DURCH EINE NEUE LEITEINRICHTUNG UND DAZU AUSGEBILDETES AUTOMATISIERUNGSSYSTEM**
METHOD FOR REPLACING AN EXISTING CONTROL DEVICE IN AN AUTOMATION SYSTEM WITH A NEW CONTROL DEVICE AND AUTOMATION SYSTEM DESIGNED FOR THIS PURPOSE
PROCÉDÉ DE REMPLACEMENT D'UN ÉQUIPEMENT DE CONDUCTION EXISTANT DANS UN SYSTÈME D'AUTOMATISATION PAR UN NOUVEL ÉQUIPEMENT DE CONDUCTION ET SYSTÈME D'AUTOMATISATION AINSI CONSTRUIT

(30) Priorität: 10.03.2010 DE 102010010890
(43) Veröffentlichungstag der Anmeldung: 16.01.2013
(73) Patentinhaber: Siemens Aktiengesellschaft, 80333 München (DE)
(72) Erfinder: POLZER, Kurt, 72072 Tübingen (DE)
(86) Internationale Anmeldenummer: PCT/EP2011/053654
(87) Internationale Veröffentlichungsnummer: WO 2011/110649

(56) Entgegenhaltungen:
- EP-A1- 1 840 684
- GB-A- 2 403 043
- US-A- 4 819 149
- US-A- 5 761 518
- US-A1- 2005 047 330

## Beschreibung

Die Erfindung betrifft ein Verfahren zum Ersetzen einer bestehenden Leiteinrichtung in einem Automatisierungssystem durch eine neue Leiteinrichtung.

Die Erfindung betrifft ferner ein dazu ausgebildetes Automatisierungssystem.

In Automatisierungssystemen für technische oder industrielle Anlagen, z. B. der Prozessindustrie, Produktions- und Fertigungsindustrie, Kraftwerksindustrie, Gebäudetechnik oder Netzwerktechnik, führen in der betreffenden Anlage örtlich verteilte, dezentrale Automatisierungskomponenten, wie z. B. Feld- oder Prozessgeräte, vorgegebene Funktionen im Rahmen der Anlagenautomatisierung aus und tauschen dabei prozess-, anlagen- und/oder geräterelevante Informationen ggf. untereinander, immer aber mit übergeordneten Komponenten des Automatisierungssystems, insbesondere dessen Leit- bzw. Engineeringsystem, aus. Zu den Automatisierungskomponenten gehören u. a. Messumformer für Druck, Temperatur, Durchfluss, Füllstand usw., Analysengeräte für Gas- oder Flüssigkeitsanalyse, Wägesysteme, Stellantriebe, Stellungsregler für Ventile, sonstige dezentrale Regler und Frequenzumrichter für elektromotorische Antriebe. Zum Austausch der Daten innerhalb des Automatisierungssystems sind die Automatisierungskomponenten im dezentralen Peripheriebereich, ggf. zusammen mit dezentraler Steuerung und Regelung und Bedienung und Beobachtung, über Feldbusse oder andere Kommunikationswege miteinander verbunden, wobei unterschiedliche Feldbusse über Buskoppler miteinander verbunden sind. Die Feldbusse können wiederum über Steuereinrichtungen, wie z. B. speicherprogrammierbare Automatisierungsgeräte, an einem zentralen Anlagenbus angebunden sein, an dem auch das Leit- bzw. Engineeringsystem, also die zentrale Steuerung, Regelung, Bedienung und Beobachtung, angeschlossen ist. Das Leit- bzw. Engineeringsystem besteht aus einer oder aus mehreren Leiteinrichtungen, wobei hier unter einer Leiteinrichtung auch ein Teilsystem des Leit- bzw. Engineeringsystems zu verstehen ist.

Aus der US 7623479 ist ein Automatisierungssystem bekannt, bei dem die Automatisierungskomponenten sowohl drahtgebunden als auch drahtlos mit dem Leitsystem kommunizieren können, wobei die drahtgebundene Kommunikation für die eigentliche Prozessautomatisierung und die drahtlose Kommunikation bei Störungen oder Wartungsarbeiten an der drahtgebundenen Kommunikation oder für besondere Überwachungs- und Steueraufgaben verwendet wird. Für die drahtlose Kommunikation enthalten die Automatisierungskomponenten Funksender oder sind gruppenweise an Funksendern angeschlossen. Inzwischen sind auch Funksender in Form von lösbar an Automatisierungskomponenten montierbaren Adaptern bekannt geworden.

Beim Ersatz eines bestehenden Automatisierungssystems durch ein neues werden oft die vorhandenen Automatisierungskomponenten weiter verwendet und nur das Leitsystem oder Teile davon (Leiteinrichtung) ausgetauscht. Die Automatisierungskomponenten können aber nur an einem System gleichzeitig angeschlossen und betrieben werden. Beim Wechsel der Leiteinrichtung werden die Automatisierungskomponenten von der alten Leiteinrichtung abgeklemmt und an die neue Leiteinrichtung angeschlossen. Diese Umverdrahtung ist aufwendig und führt zu langen und kostenintensiven Stillstandzeiten. Um diese Stillstandzeiten zu reduzieren, können neue Leitungen zusätzlich zu den vorhandenen installiert werden, jedoch ist dazu in den Kabelschächten oft nicht ausreichend Platz vorhanden. Erst nach dem Anschluss der Automatisierungskomponenten an die neue Leiteinrichtung kann deren Test und Inbetriebnahme erfolgen.

Ausgehend von einem bekannten Verfahren zum Ersetzen einer bestehenden Leiteinrichtung in einem Automatisierungssystem durch eine neue Leiteinrichtung, wobei die bestehende und neue Leiteinrichtung jeweils dazu ausgebildet sind, Messwerte von Automatisierungskomponenten des Automatisierungssystems zu erhalten, verarbeiten und Steuerwerte für die oder einzelne der Automatisierungskomponenten und/oder andere Automatisierungskomponenten zu erzeugen, wird gemäß der Erfindung das Problem der Stillstandzeiten dadurch gelöst, dass zum Testen der neuen Leiteinrichtung während des Betriebs der bestehenden Leiteinrichtung, wobei diese Messwerte erhält und Steuerwerte an die Automatisierungskomponenten ausgibt, die Messwerte und Steuerwerte drahtlos an die neue Leiteinrichtung übertragen und die von dieser erzeugten Steuerwerte mit den von der bestehenden Leiteinrichtung erzeugten Steuerwerten verglichen werden, und dass nach dem Test die von der neuen Leiteinrichtung erzeugten Steuerwerte anstelle der von der bisherigen Leiteinrichtung erzeugten Steuerwerte an die Automatisierungskomponenten ausgegeben werden.

Die neue Leiteinrichtung wird also getestet, während die Automatisierungskomponenten noch zusammen mit der alten Leiteinrichtung betrieben werden. Dabei erhält die neue Leiteinrichtung auf drahtlosem Kommunikationsweg die von den Automatisierungskomponenten erzeugten Messwerte, wozu je nach Bedarf auch gerätespezifische Parameter und Statusinformationen gezählt werden. Die neue Leiteinrichtung erzeugt in Anhängigkeit von den erhaltenen Messwerten und gegebenenfalls von Bedieneingaben durch Bedienpersonal Steuerwerte, die aber nicht an die Automatisierungskomponenten ausgegeben, sondern mit den von der alten Leiteinrichtung erzeugten und an die Automatisierungskomponenten ausgegebenen Steuerwerten verglichen werden. Erst nach erfolgreichem Test der neuen Leiteinrichtung werden die Automatisierungskomponenten zusammen mit der neuen Leiteinrichtung betrieben, indem die von der neuen Leiteinrichtung erzeugten Steuerwerte anstelle der von der bisherigen Leiteinrichtung erzeugten Steuerwerte an die Automatisierungskomponenten ausgegeben werden.

Das erfindungsgemäße Verfahren kann unabhängig davon zur Anwendung kommen, ob in dem Automatisierungssystem die Automatisierungskomponenten standardmäßig drahtgebunden und/oder drahtlos mit der alten bzw. neuen Leiteinrichtung kommunizieren. Derzeit sind jedoch Automatisierungssysteme mit drahtgebundener oder zumindest überwiegend drahtgebundener Kommunikationsstruktur (Bussysteme, Zweidrahtleitungen) immer noch die Regel, wobei das erfindungsgemäße Verfahren gerade in Bezug auf diese Automatisierungssysteme große Vorteile zeigt. Bei solchen Automatisierungssystemen, in denen zumindest ein Teil der Automatisierungskomponenten über drahtgebundene Kommunikationswege mit der bestehenden Leiteinrichtung verbunden ist, werden nach dem Test der neuen Leiteinrichtung die drahtgebundenen Kommunikationswege von der bestehenden Leiteinrichtung gelöst und an die neue Leiteinrichtung geschaltet.

Die zum Test der neuen Leiteinrichtung verwendeten Steuerwerte der bisherigen Leiteinrichtung können von dieser direkt drahtlos an die neue Leiteinrichtung übertragen werden. Vorzugsweise werden die Steuerwerte von denjenigen Automatisierungskomponenten, für die sie bestimmt sind, an die neue Leiteinrichtung übertragen, so wie auch die Messwerte von denjenigen Automatisierungskomponenten, die sie erzeugen, an die neue Leiteinrichtung übertragen werden. Dazu können die Automatisierungskomponenten Funksender enthalten oder zu zweit oder mehreren an Funksendern angeschlossen sein. Bei Automatisierungssystemen mit drahtgebundener Kommunikationsstruktur werden die drahtlosen Kommunikationswege nur für den Test der neuen Leiteinrichtung benötigt, so dass die Auto-matisierungskomponenten vorzugsweise mit Funkadaptern zur drahtlosen Übertragung der Messwerte und/oder Steuerwerte an die neue Leiteinrichtung versehen werden. Die Funkadapter sind lösbar an den Automatisierungskomponenten montiert und können somit nach Inbetriebnahme der neuen Leiteinrichtung entfernt werden.

Ein Automatisierungssystem mit einer Leiteinrichtung, die dazu ausgebildet ist, Messwerte von Automatisierungskomponenten des Automatisierungssystems zu erhalten und Steuerwerte für die oder einzelne der Automatisierungskomponenten und/oder andere Automatisierungskomponenten zu erzeugen, ist entsprechend der Erfindung in der Weise ausgebildet, dass die Automatisierungskomponenten Sendemittel zur drahtlosen Übertragung der Messwerte und der erhaltenen Steuerwerte an die Leiteinrichtung aufweisen und dass die Leiteinrichtung Mittel zum Vergleich der von ihr erzeugten Steuerwerte mit den von den Automatisierungskomponente empfangen Steuerwerten aufweist.

Dabei bestehen die Sendemittel aus den oben genannten Gründen vorzugsweise aus Funkadaptern, die lösbar an den Automatisierungskomponenten montiert sind.

Die Leiteinrichtung weist vorzugsweise Mittel zum Umschalten zwischen dem drahtlosen Empfang der Messwerte während des Tests und einem drahtgebundenen Empfang der Messwerte nach dem Anschluss der neuen Leiteinrichtung an die drahtgebundene Kommunikationsstruktur auf.

Zur weiteren Erläuterung der Erfindung wird im Folgenden auf die Figuren der Zeichnung Bezug genommen; im Einzelnen zeigen:
- Figur 1: ein Ausführungsbeispiel eines Automatisierungssystems zur Durchführung des erfindungsgemäßen Verfahrens und
- Figur 2: ein Blockschaltbild mit zwei Automatisierungskomponenten in Form eines Sensors bzw. Aktors, die von einem alten an ein neues Automatisierungsgerät angeschlossen werden sollen.

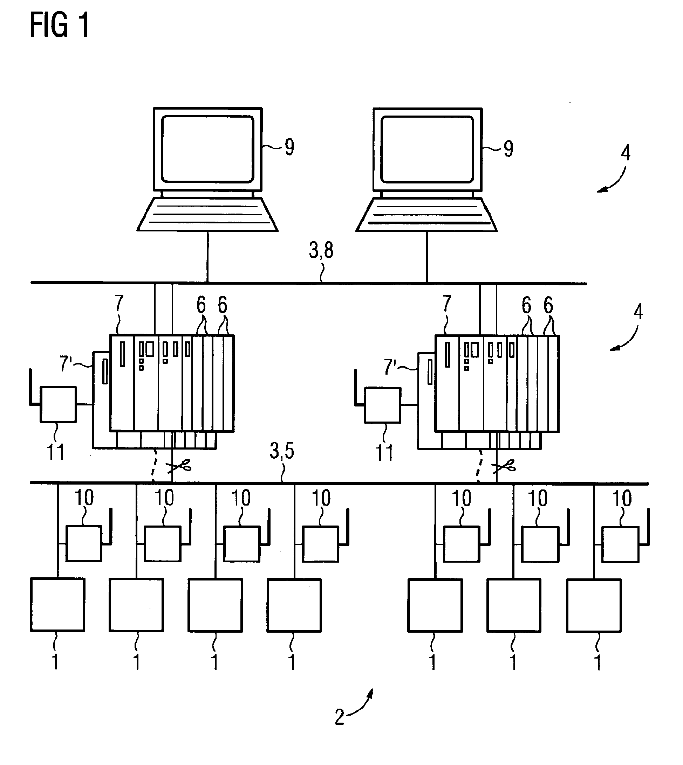

Figur 1 zeigt in vereinfachter schematischer Darstellung ein Beispiel für ein Automatisierungssystem mit einer Vielzahl von Automatisierungskomponenten (Feldgeräte) 1, die in einem zu steuernden und/oder zu regelnden Prozess, also auf Feldebene 2, vorgegebene Mess-, Steuer- und Regelungsfunktionen wahrnehmen und dabei insbesondere Messgrößen aus dem Prozess erfassen und durch Stelleingriffe auf den Prozess einwirken. Bei den Feldgeräten 1 kann es sich um Sensoren, Aktoren, Messumformer, Analysengeräte, Antriebe usw. handeln. Die Feldgeräte 1 tauschen über ein in der Regel drahtgebundenes Kommunikationssystem 3 prozess-, funktions- und/oder geräterelevante Daten untereinander und mit einem Leit- und Engineeringsystem 4 aus, wozu die Feldgeräte 1 über einen Feldbus 5, z. B. nach dem PROFIBUS-Standard, an Ein- und Ausgabe-Baugruppen 6 von Automatisierungsgeräten 7, z. B. speicherprogrammierbaren Steuerungen (SPS), angeschlossen sind, welche wiederum über einen zentralen Anlagenbus 8 mit übergeordneten Rechnersystemen 9 verbunden sind.

Im Folgenden wird angenommen, dass die aus den Automatisierungsgeräten 7 bestehende Leiteinrichtung durch eine neue Leiteinrichtung 7' ersetzt werden soll. Dazu werden die Automatisierungskomponenten (Feldgeräte) 1 mit Funkadaptern 10 versehen, die von den Feldgeräten 1 erzeugte Messwerte bzw. von der bestehenden Leiteinrichtung 7 für die Feldgeräte 1 erzeugte Steuerwerte an die neue Leiteinrichtung 7' drahtlos übertragen. Die neue Leiteinrichtung 7', die dazu mit entsprechenden Funkempfängern 11 verbunden und noch nicht an dem Feldbus 5 angeschlossen ist, erzeugt in Anhängigkeit von den erhaltenen Messwerten und gegebenenfalls von z. B. an den Rechnersystemen 9 vorgenommenen Bedieneingaben Steuerwerte, die aber nicht an die Automatisierungskomponenten 1 ausgegeben, sondern mit den von der alten Leiteinrichtung 7 erzeugten und an die Automatisierungskomponenten 1 ausgegebenen Steuerwerten verglichen werden. Erst nach erfolgreichem Test der neuen Leiteinrichtung 7' werden die Automatisierungskomponenten zusammen mit der neuen Leiteinrichtung 7' betrieben, indem die alte Leiteinrichtung 7 von dem Kommunikationssystem 3 getrennt und die neue Leiteinrichtung 7' mit dem Feldbus 5 verbunden wird.

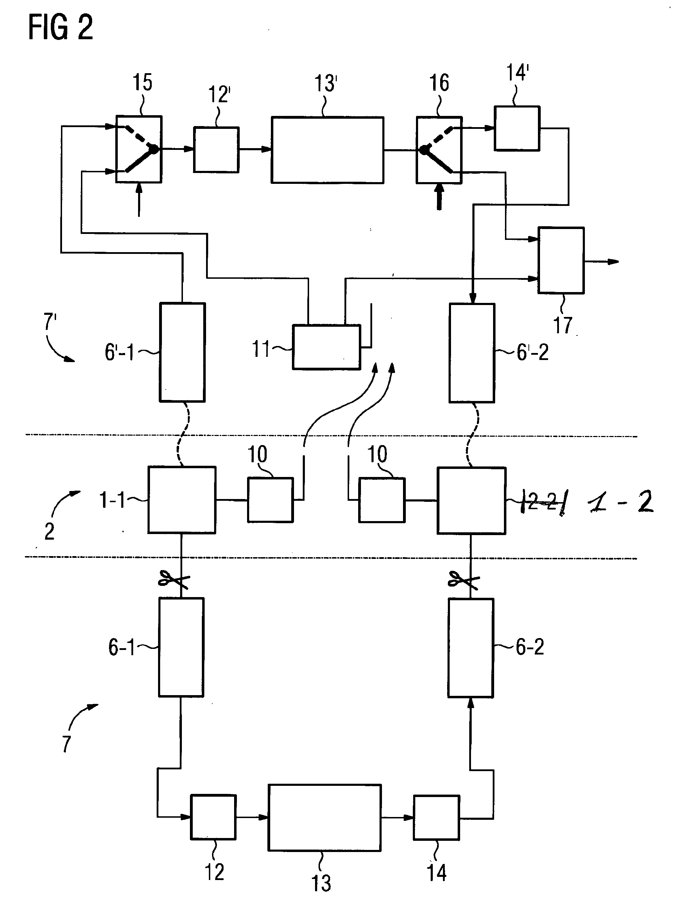

Figur 2 zeigt in einem Blockschaltbild zwei Automatisierungskomponenten 1, von denen die linke einen Sensor 1-1 und die rechte einen Aktor 1-2 repräsentiert, und ein altes und neues Automatisierungsgerät 7 bzw. 7', welche die alte bzw. neue Leiteinrichtung repräsentieren. Der Sensor 1-1 ist an einer Eingabegaugruppe 6-1 und der Aktor 1-2 an einer Ausgabebaugruppe 6-2 des alten Automatisierungsgeräts 7 angeschlossen. Die von dem Sensor 1-1 gelieferten Messwerte werden über einen Eingangstreiber 12 einem Regelalgorithmus 13 zugeführt, der, gegebenenfalls in Abhängigkeit von weiteren Messwerten, Steuerwerte berechnet, die über einen Ausgangstreiber 14 dem Aktor 1-2 zugeführt werden.

Das neue Automatisierungsgerät 7' weist entsprechend eine Eingabegaugruppe 6'-1, einen Eingangstreiber 12', einen Regelalgorithmus 13', einen Ausgangstreiber 14' und eine Ausgabegaugruppe 6'-2 auf. Der Sensor 1-1 und der Aktor 1-2 sind zunächst noch nicht an dem Eingangstreiber 12' bzw. Ausgangstreiber 14' angeschlossen.

Zum Testen des neuen Automatisierungsgeräts 7' werden die von dem Sensor 1-1 erzeugten Messwerte und die dem Aktor 1-2 zugeführten Steuerwerte drahtlos an das neue Automatisierungsgeräts 7' übertragen. Der dortige Funkempfänger 11 ist als Gateway ausgebildet, das die empfangenen Messwerte dem Eingangstreiber 12' zuführt. Dazu ist zwischen der Eingabebaugruppe 6'-1 und dem Eingangstreiber 12' eine Umschalteinrichtung 15 vorgesehen, die je nach Schaltstellung entweder die von der Eingabebaugruppe 6'-1 oder dem Funkempfänger 11 kommenden Messwerte dem Eingangstreiber 12' zuführt. Der nachgeordnete Regelalgorithmus 13' erzeugt Steuerwerte, die über eine weitere Umschalteinrichtung 16 entweder der Ausgabebaugruppe 6'-2 oder einer Vergleichseinrichtung 17 zugeführt werden, welche außerdem die von dem Funkempfänger 11 empfangenen Steuerwerte des alten Automatisierungsgeräts 7 erhält. Die während des Betriebs des Sensors 1-1 und Aktors 1-2 zusammen mit dem alten Automatisierungsgerät 7 erhaltenen Messwerte und erzeugten Steuerwerte werden drahtlos an das neue Automatisierungsgerät 7' übertragen, wobei die von dem neuen Automatisierungsgerät 7' aufgrund der übertragenen Messwerte erzeugten Steuerwerte mit den von dem alten Automatisierungsgerät 7 erzeugten Steuerwerten verglichen werden. Nach dem Test werden der Sensor 1-1 und Aktor 1-2 von dem alten Automatisierungsgerät 7 getrennt und an der Eingabe- bzw. Ausgabegaugruppe 6'-1 bzw. 6'-2 des neuen Automatisierungsgeräts 7' angeschlossen.

## Patentansprüche

1. Verfahren zum Ersetzen einer bestehenden Leiteinrichtung (7) in einem Automatisierungssystem durch eine neue Leiteinrichtung (7'), wobei die bestehende und neue Leiteinrichtung (7, 7') jeweils dazu ausgebildet sind, Messwerte von Automatisierungskomponenten (1) des Automatisierungssystems zu erhalten, zu verarbeiten und Steuerwerte für die oder einzelne der Automatisierungskomponenten (1) und/oder andere Automatisierungskomponenten (1) zu erzeugen, **dadurch gekennzeichnet, dass** zum Testen der neuen Leiteinrichtung (7') während des Betriebs der bestehenden Leiteinrichtung (7), wobei diese Messwerte erhält und Steuerwerte an die Automatisierungskomponenten (1) ausgibt, die Messwerte und Steuerwerte drahtlos an die neue Leiteinrichtung (7') übertragen und die von dieser erzeugten Steuerwerte mit den von der bestehenden Leiteinrichtung (7) erzeugten Steuerwerten verglichen werden, und dass nach dem Test die von der neuen Leiteinrichtung (7') erzeugten Steuerwerte anstelle der von der bisherigen Leiteinrichtung (7) erzeugten Steuerwerte an die Automatisierungskomponenten (1) ausgegeben werden.

2. Verfahren nach Anspruch 1, **dadurch gekennzeichnet, dass** zumindest ein Teil der Automatisierungskomponenten (1) über drahtgebundene Kommunikationswege (8) mit der bestehenden Leiteinrichtung (7) verbunden ist und dass nach dem Test die drahtgebundenen Kommunikationswege (8) von der bestehenden Leiteinrichtung (7) gelöst und an die neue Leiteinrichtung (7') geschaltet werden.

3. Verfahren nach Anspruch 1 oder 2, **dadurch gekennzeichnet, dass** die Automatisierungskomponenten (1) mit Funkadaptern (10) zur drahtlosen Übertragung der Messwerte und/oder Steuerwerte an die neue Leiteinrichtung (7') versehen werden.

4. Automatisierungssystem mit einer Leiteinrichtung (7'), die dazu ausgebildet ist, Messwerte von Automatisierungskomponenten (1) des Automatisierungssystems zu erhalten und Steuerwerte für die oder einzelne der Automatisierungskomponenten (1) und/oder andere Automatisierungskomponenten (1) zu erzeugen, **dadurch gekennzeichnet, dass** die Automatisierungskomponenten (1) Sendemittel (10) zur drahtlosen Übertragung der Messwerte und der erhaltenen Steuerwerte an die Leiteinrichtung (7') aufweisen und dass die Leiteinrichtung (7') Mittel (17) zum Vergleich der von ihr erzeugten Steuerwerte mit den von den Automatisierungskomponenten (1) empfangenen Steuerwerten aufweist.

5. Automatisierungssystem nach Anspruch 4, **dadurch gekennzeichnet, dass** die Sendemittel aus Funkadaptern (10) bestehen, die lösbar an den Automatisierungskomponenten (1) montiert sind.

6. Automatisierungssystem nach Anspruch 4 oder 5, **dadurch gekennzeichnet, dass** die Leiteinrichtung (7') Mittel (15) zum Umschalten zwischen dem drahtlosen und einem drahtgebundenen Empfang der Messwerte aufweist.

## Claims

1. Method for replacing an existing control device (7) in an automation system by a new control device (7'), whereby the existing and new control devices (7, 7') are both designed to receive measured values from automation components (1) of the automation system, to process them and to generate control values for the, or for individual, automation components (1) and/or other automation components (1), **characterized in that** in order to test the new control device (7') during operation of the existing control device (7), whereby the latter receives measured values and outputs control values to the automation components (1), the measured values and control values are transmitted wirelessly to the new control device (7'), and the control values generated by the latter are compared with the control values generated by the existing control device (7), and that after the test the control values generated by the new control device (7') are output to the automation components (1) instead of the control values generated by the former control device (7).

2. Method according to Claim 1, **characterized in that** at least some of the automation components (1) are connected to the existing control device (7) over wired communication paths (8), and that after the test the wired communication paths (8) are disconnected from the existing control device (7) and connected to the new control device (7').

3. Method according to one of Claims 1 or 2, **characterized in that** the automation components (1) are fitted with radio adapters (10) for wireless transmission of the measured values and/or control values to the new control device (7').

4. Automation system with a control device (7') that is designed to receive measured values from automation components (1) of the automation system and to generate control values for the, or for individual, automation components (1) and/or other automation components (1), **characterized in that** the automation components (1) comprise means of transmission (10) for wireless transmission of the measured values and the control values received to the control device (7'), and that the control device (7') comprises means (17) for comparing the control values it has generated with the control values received from the automation components (1).

5. Automation system according to Claim 4, **characterized in that** the means of transmission consist of radio adapters (10) that are detachably mounted on the automation components (1).

6. Automation system according to one of Claims 4 or 5, **characterized in that** the control device (7') comprises means (15) for switching between the wireless and wired reception of the measured values.

## Revendications

1. Procédé de remplacement d'un dispositif ( 7 ) de conduite existant d'un système d'automatisation par un nouveau dispositif ( 7' ) de conduite, les dispositifs ( 7, 7' ) de conduite existant et nouveau étant constitués respectivement pour recevoir des valeurs de mesure de composants ( 1 ) d'automatisation du système d'automatisation, les traiter et produire des valeurs de commande pour les composants ( 1 ) d'automatisation ou certains d'entre eux et/ou pour d'autres composants ( 1 ) d'automatisation, **caractérisé en ce que**, pour tester le nouveau dispositif ( 7' ) de conduite pendant le fonctionnement du dispositif ( 7 ) de conduite existant, celui-ci recevant des valeurs de mesure et envoyant des valeurs de commande aux composants ( 1 ) d'automatisation, les valeurs de mesure et les valeurs de commande sont transmises sans fil au nouveau dispositif ( 7' ) de conduite et les valeurs de commande produites par celui-ci sont comparées aux valeurs de commande produites par le dispositif ( 7 ) de conduite existant et **en ce que**, après le test, les valeurs de commande produites par le nouveau dispositif ( 7' ) de conduite sont envoyées aux composants ( 1 ) d'automatisation au lieu des valeurs de commande produites par le dispositif ( 7 ) de conduite jusqu'ici.

2. Procédé suivant la revendication 1, **caractérisé en ce qu'**au moins une partie des composants ( 1 ) d'automatisation est reliée au dispositif ( 7 ) de conduit existant par des chemins ( 8 ) de communication par fil et **en ce que**, après le test, les chemins ( 8 ) de communication par fil sont séparés du dispositif ( 7 ) de conduite existant et mis sur le nouveau dispositif ( 7' ) de conduite.

3. Procédé suivant la revendication 1 ou 2, **caractérisé en ce que** les composants ( 1 ) d'automatisation sont pourvus d'adaptateurs ( 10 ) radio pour la transmission sans fil des valeurs de mesure et/ou des valeurs de commande au nouveau dispositif ( 7' ) de conduite.

4. Système d'automatisation, comprenant un dispositif ( 7' ) de conduite, qui est constitué pour recevoir des valeurs de mesure de composants ( 1 ) d'automatisation du système d'automatisation et pour produire des valeurs de commande des composants ( 1 ) d'automatisation ou de certains d'entre eux et/ou d'autres composants ( 1 ) d'automatisation, **caractérisé en ce que** les composants ( 1 ) d'automatisation ont des moyens ( 10 ) d'émission pour la communication sans fil des valeurs de mesure et des valeurs de commande obtenues au dispositif ( 7' ) de conduite et **en ce que** le dispositif ( 7' ) de conduite a des moyens ( 17 ) de comparaison des valeurs de commande qu'il a produites aux valeurs de commande reçues des composants ( 1 ) d'automatisation.

5. Système d'automatisation suivant la revendication 4, **caractérisé en ce que** les moyens d'émission sont constitués d'adaptateurs ( 10 ) radio, qui sont montés de manière amovible sur les composants ( 1 ) d'automatisation.

6. Système d'automatisation suivant la revendication 4 ou 5, **caractérisé en ce que** le dispositif ( 7' ) de conduite a des moyens ( 15 ) de commutation entre la réception sans fil et une réception par fil des valeurs de mesure.
